# DEMANDE DE BREVET EUROPEEN

(11) **EP 2 916 542 A1**
(43) Date de publication de la demande: **09.09.2015**
(21) Numéro de dépôt: 15157093.4
(22) Date de dépôt: 02.03.2015
(51) Int. Cl.: H04N 7/18, G08B 13/196

(54) **Procédé et système de supervision, notamment appliqué à la vidéosurveillance**

(30) Priorité: 04.03.2014 FR 1400531
(71) Demandeur: Thales, 92400 Courbevoie (FR)
(72) Inventeur: Goudou, Jean-François, 78141 VELIZY VILLACOUBLAY (FR); Galimberti, Arnaud, 78141 VELIZY VILLACOUBLAY (FR); Griffoulieres, Mikaël, 78141 VELIZY VILLACOUBLAY (FR)
(74) Mandataire: Lucas, Laurent Jacques

(57) **Abrégé**

Le procédé est mis en oeuvre par ordinateur pour extraire, manipuler et visualiser un ensemble d'informations provenant d'un réseau de capteurs incluant un ensemble de caméras vidéo (2), le procédé comportant au moins les étapes suivantes :
- Extraire des informations sur les objets et les événements présents dans une scène enregistrée par lesdits capteurs sous forme de pistes spatio-temporelle issues des capteurs (2, 8) ;
- Enregistrer lesdites informations sous formes de volumes spatiotemporels et de données numériques, textuelles et/ou images incluant le type d'objet et d'événement, lesdites données incluant l'identifiant du capteur dont elles sont issues ;
- Sélectionner une partie desdits volumes spatio-temporels desdits objets et événements ayant été détectés selon le type d'objet ou d'événement et selon leur localisation spatiale et temporelle ;
- Lors de la sélection de l'un desdits volumes spatio-temporels, afficher la ou les séquences vidéo positionnées temporellement à l'instant (To) de la présence de ce volume spatio-temporel et afficher sur un écran (7) l'ensemble des informations de pistes spatio-temporelles issues des capteurs associés à ce volume.

## Description

La présente invention concerne un procédé de supervision exploitant les informations issues d'un ensemble de capteurs. Elle concerne également un système mettant en oeuvre un tel procédé. Elle s'applique notamment à la vidéo-surveillance et par exemple dans le domaine de la sécurité des biens et des personnes, en particulier du contrôle d'accès, de la supervision et de la vidéo-protection.

La vidéo-protection est couramment utilisée comme moyen de surveillance de sites collectifs ou critiques. Elle est utilisée aussi bien en environnement intérieur qu'en environnement extérieur. Les sites collectifs exploitant la vidéo-protection peuvent notamment concerner les bâtiments à usage public, comme les entreprises, les administrations, les centres commerciaux et les universités. La vidéo-protection peut également concerner les transports publics comme les rames et les voitures de transport ferroviaire, les bus, les avions et les ferries, ainsi que les zones publiques comme les rues et les parkings publics.

A l'heure actuelle, les systèmes de vidéo-protection sont généralement constitués des éléments suivant :
- un ensemble de caméras vidéo analogiques ou numériques ;
- des consoles de vidéo-protection comportant notamment des écrans de visualisation pour contrôler les caméras et visionner les flux vidéo des différentes caméras, et ;
- un réseau de communication entre les caméras vidéo et les consoles de vidéo-protection.

Lorsque les caméras vidéo sont analogiques, elles peuvent être associées à des encodeurs numériques afin de transférer les flux vidéo sous format numérique. Les systèmes de vidéo- protection peuvent également comporter un système d'enregistrement vidéo afin de pouvoir rejouer une séquence particulière, par exemple en cas d'investigation policière. En outre, ils peuvent comporter des moyens de traitement de flux vidéo. Ces moyens de traitement peuvent être installés dans les caméras vidéo ou dans des serveurs reliés aux consoles de vidéo-protection. Ils comportent essentiellement des algorithmes de traitement d'images. Ils permettent d'automatiser tout ou partie de la surveillance et ainsi d'alléger les besoins en ressources humaines. Les moyens de traitement peuvent notamment détecter, identifier ou authentifier une entité. Par entité, on entend tout objet animé ou inanimé. La détection correspond à la détermination de la présence d'une entité quelconque dans la zone observée. L'identification correspond à la détermination de l'identité de l'entité détectée ou, tout au moins, du type d'identité détectée. L'authentification correspond à la vérification de l'identité de l'entité. Les moyens de traitement peuvent également servir au contrôle de flux de personnes ou de véhicules. Ce contrôle peut consister à estimer ou à comptabiliser une population présente dans une zone donnée. Il peut notamment s'appliquer à la surveillance de mouvements de foule, à la gestion de files d'attente et au contrôle du respect des normes de sécurité en termes de capacité d'accueil. Des automatismes adaptés peuvent alors déclencher une alarme en cas d'anomalie détectée. A titre d'exemple, l'alarme peut être déclenchée si une personne non habilitée à circuler dans une zone y est présente, ou si un accident se produit sur une voie de circulation. Plus généralement, les moyens de traitement vidéo permettent de réaliser une fonction spécifique à partir des flux vidéo.

Un problème qui se pose avec les systèmes de vidéo-protection est la supervision permanente par un opérateur. Il est possible qu'un opérateur soit obligé de s'absenter temporairement ou d'effectuer des actions tierces. Dans ce cas, l'opérateur n'aura pas visualisé une partie des flux vidéo. En d'autres termes, ces systèmes impliquent une visualisation passive où l'opérateur doit extraire les informations.

Un but de l'invention est notamment d'assister un opérateur dans cette tâche de surveillance, en particulier en fournissant un système permettant à l'opérateur de naviguer rapidement dans des enregistrements vidéo passés pouvant aller jusqu'à l'instant présent afin de comprendre les événements qui se sont produits entre l'instant de la demande et un instant du passé. A cet effet, l'invention a pour objet un procédé
de supervision mis en oeuvre par ordinateur pour extraire, manipuler et visualiser un ensemble d'informations provenant d'un réseau de capteurs incluant un ensemble de caméras vidéo, ledit procédé comportant au moins les étapes suivantes :
- Extraire des informations sur les objets et les événements présents dans une scène enregistrée par lesdits capteurs sous forme de pistes spatio-temporelle issues des capteurs ;
- Enregistrer lesdites informations sous forme de volumes spatio-temporels et de données numériques, textuelles et/ou images incluant le type d'objet et d'événement, lesdites données incluant l'identifiant du capteur dont elles sont issues ;
- Sélectionner une partie desdits volumes spatio-temporels desdits objets et événements ayant été détectés selon le type d'objet ou d'événement et selon leur localisation spatiale et temporelle ;
- Lors de la sélection de l'un desdits volumes spatio-temporels, afficher la ou les séquences vidéo positionnées temporellement à l'instant de la présence de ce volume spatio-temporel et afficher sur un écran l'ensemble des informations de pistes spatio-temporelles issues des capteurs associés à ce volume.

Dans un mode de réalisation particulier, lesdites informations de piste affichées sont liées auxdits objets ou auxdits événements.

Tout élément d'intérêt, parmi lesdites informations, est par exemple apte à être stocké dans une liste spécifique par sélection d'un opérateur, ledit événement étant apte à être lié à d'autres éléments via ladite liste en sélectionnant ledit événement et ces autres dits éléments dans ladite liste par une interface de navigation.

Avantageusement, lesdites informations de piste affichées sont par exemple compressées temporellement et spatialement.

Les emplacements physiques des capteurs fournissant des informations sont par exemple visibles sur une représentation cartographique affichée sur ledit écran.

Dans un autre mode de réalisation avantageux de l'invention, les emplacements physiques des capteurs fournissant des informations sont par exemple visibles sur lesdites séquences vidéo affichés sur ledit écran.

Des informations associées auxdits capteurs sont par exemple affichées par sélection desdits emplacements.

Le procédé selon l'invention peut être avantageusement appliqué à des opérations de vidéosurveillance.

L'invention a également pour objet un système mettant en oeuvre ce procédé de supervision, comportant au moins :
- un réseau de capteurs incluant un ensemble de caméras vidéo, destiné à être installé sur un site à superviser ;
- un écran de visualisation équipé d'un système de navigation ;
- une infrastructure de traitement apte à acquérir les données issues desdits capteurs et relié et apte à mettre en oeuvre le procédé selon l'une des revendications précédentes, ladite infrastructure comportant au moins un écran de visualisation équipé d'un système de navigation, ledit écran affichant lesdites séquences vidéo et lesdites informations de pistes spatio-temporelles.

D'autres caractéristiques et avantages de l'invention apparaîtront à l'aide de la description qui suit, faite en regard de dessins annexés qui représentent :
- la figure 1, un exemple de composants utilisés dans un système de vidéosurveillance selon l'invention ;
- la figure 2, une illustration du principe de l'invention ;
- la figure 3, un exemple d'affichage des informations de vidéosurveillance.

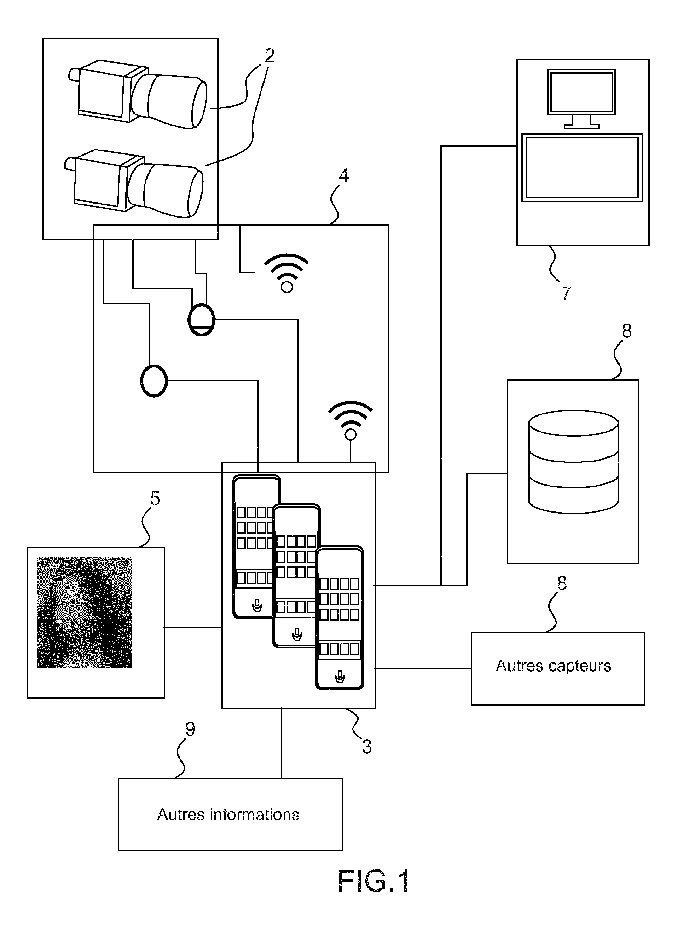

La figure 1 présente de façon simplifiée un exemple de système selon l'invention, plus particulièrement des composants pouvant être utilisés dans un système selon l'invention. Le système de vidéo-protection illustré par la figure 1 comporte un ensemble de caméras vidéo 2, une infrastructure de traitement 3 et un réseau de communication 4 entre les caméras 2 et l'infrastructure de traitement apte à transférer les données vidéo des caméras 2 vers l'infrastructure de traitement 3. Le réseau de communication peut être un réseau câblé local, tel qu'un réseau Ethernet, ou un réseau sans fil. Il peut éventuellement être relié au réseau Internet. L'infrastructure de traitement 3 comporte des moyens de traitement 5 des données vidéo. Par moyens de traitement vidéo 5, on entend tout moyen physique ou logiciel apte à tirer une information à partir d'une image ou d'une séquence d'images.

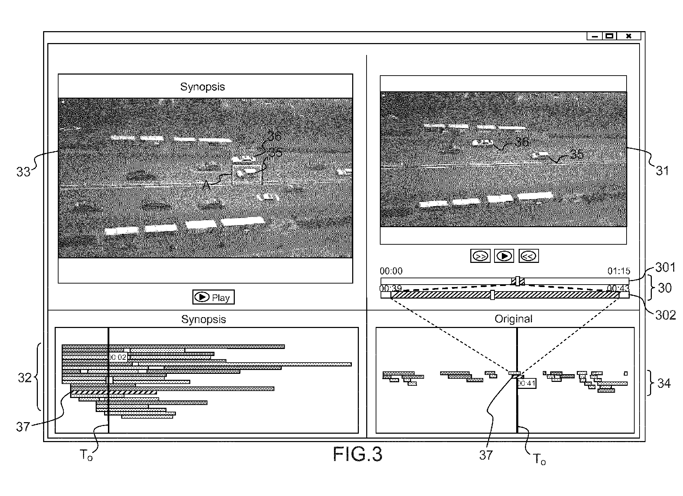

L'infrastructure de traitement 3 comporte en outre un système de visualisation rapide 7. Ce système de visualisation rapide comprend un écran de visualisation sur lequel sont par exemple affichés deux panneaux. Sur l'un des panneaux se situent le flux vidéo original complet, une zone de navigation temporelle et une zone de synoptique. Sur le second panneau se situent le flux d'images condensé et une zone de synoptique du flux condensé. Le flux condensé représente sur une durée plus courte que la vidéo originale tous les événements recollés de la vidéo originale selon une fonction d'optimisation. Cet exemple de système de visualisation 7 sera décrit plus précisément par la suite avec la figure 3.

L'infrastructure de traitement comporte une base de données 6 pour le stockage des vidéos et des métadonnées enregistrées par analyse automatique.

Comme on le verra par la suite, le principe de l'invention est indépendant de l'utilisation ou non de vidéo condensée. L'invention peut donc s'appliquer sans recours à la vidéo condensée. Cependant, cette dernière est notamment utile pour analyser des enregistrements vidéo. Avantageusement, un système selon l'invention peut comporter d'autres capteurs 8 et prendre en compte des informations associées aux entités et aux événements. Ainsi, l'invention permet de fournir un système qui assiste l'opérateur dans sa tâche de surveillance, en analysant à la fois des flux vidéo, condensés ou non, et d'autres flux de données provenant d'autres capteurs 8, ou d'autres sources 9 telles que des annotations ou algorithmes. Ces derniers peuvent être spécifiques à la détection, ce sont par exemple des algorithmes de détection de visage ou d'autres signes ou caractéristiques. L'invention permet alors d'enrichir les pistes vidéo en y associant des événements ou objets plus détaillés.

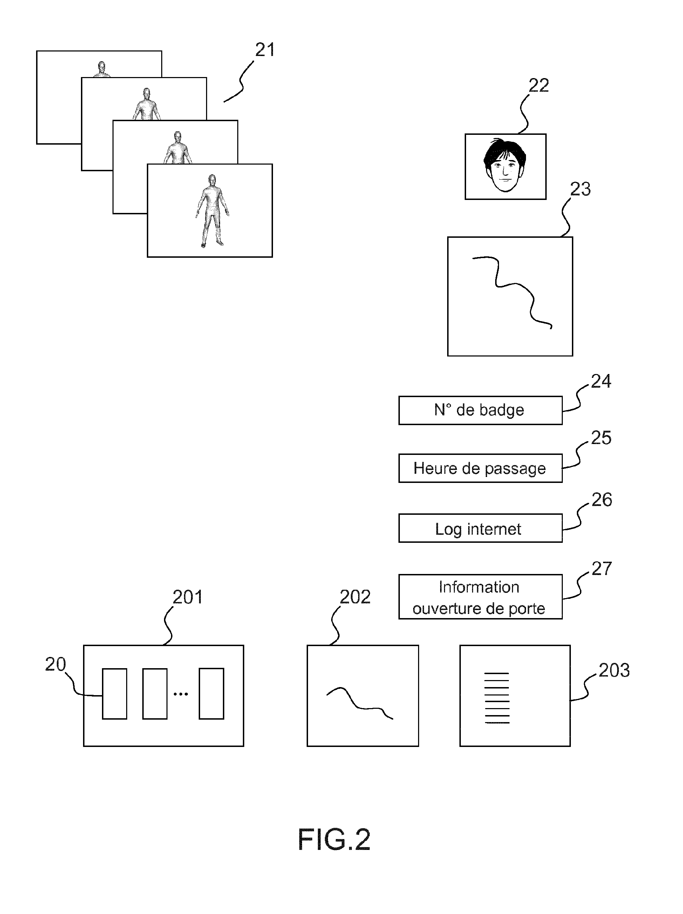

La figure 2 illustre le principe de l'invention. En plus des caméras vidéo, l'invention utilise d'autres capteurs et informations associés aux objets mobiles. Ainsi, on associe des éléments d'intérêt aux objets mobiles, personnes et véhicules par exemple, considérés comme des tubes spatio-temporels 21 dans la vidéo d'origine. Ces éléments d'intérêt sont par exemple issus des autres capteurs 8, des algorithmes particuliers ou des informations complémentaires.

Dans l'exemple de la figure 2, on associe à une piste représentée par un tube spatio-temporel divers éléments d'intérêt 22, 23, 24, 25, 26, 27 qui vont enrichir cette piste et permettre une analyse exhaustive de la scène portée par la piste. Ces éléments sont ainsi :
- un algorithme d'analyse de visage 22 ;
- une carte 23 présentant la trajectoire suivie par l'objet mobile, reconstituée par exemple à partir de la vidéo ;
- un numéro de badge 24, détecté par un capteur lors d'un passage à un endroit particulier, par exemple une porte principale d'accès ou tout autre accès ;
- une date et une heure de passage 25 à ce même endroit, obtenu par le même capteur ;
- une information de log internet 26 sur une machine ;
- une information d'ouverture de porte 27, il peut s'agit d'une ou plusieurs portes à travers un bâtiment par exemple.

A partir ce toutes ces données, un opérateur peut alors effectuer une analyse par une vue multi-caméras 201, c'est-à-dire issue de plusieurs caméras, comportant les différentes pistes 20 provenant des prises de vue multi-caméras. L'opérateur est assisté par une représentation cartographique 202 indiquant la trajectoire des différents objets mobiles captés et par une liste de tous les éléments d'intérêts associés à ce lieu et à une piste ou un événement. Cette représentation cartographique ou cartographie est une représentation synthétique de l'emplacement physique des différents objets, et notamment des différents capteurs dans le site. Ce peut être une carte des lieux, un plan 2D indiquant l'emplacement des objets. Ce n'est pas obligatoirement une représentation à l'échelle, mais elle doit correspondre à la réalité physique des emplacements. Un but étant de permettre à l'opérateur voyant cette cartographie, de comprendre d'où vient une information et où sont positionnés le ou les capteurs dont est issue cette information.

La figure 3 illustre un exemple d'application à une scène sur une autoroute, les objets mobiles étant des véhicules automobiles. Dans cet exemple, on utilise une vidéo condensée. Dans ce cas, on utilise un système de visualisation rapide 7 comme présenté sur la figure 1. Tous les traitements sont effectués par une infrastructure de traitement 5 comme présenté sur la figure 1.

Le système de visualisation rapide 7 comprend un écran de visualisation sur lequel sont affichés deux panneaux. Sur l'un des panneaux se situent le flux vidéo original complet 31, une zone de navigation temporelle 30 et une zone de synoptique 34. Dans la zone de navigation temporelle 30, deux barres de défilement temporel sont présentes. L'une de ces barres 301 permet de naviguer dans ce flux sur toute sa durée. L'autre 302 permet de naviguer à l'intérieur d'un événement. Le synoptique 30 présente sous forme de pile l'ensemble des événements, l'événement sélectionné 37 et l'instant To dans le flux où se situe l'image affichée.

Sur le second panneau se situent les flux d'images condensés 33 et une zone de synoptique 32 du flux condensé. Le flux condensé représente sur une durée plus courte que la vidéo originale tous les événements recollés de la vidéo originale selon une fonction d'optimisation utilisant comme paramètre :
- la durée souhaitée du flux vidéo condensé ;
- la causalité des événements, un événement se produisant ultérieurement dans la vidéo originale devant se situer également ultérieurement dans la vidéo condensée ;
- le type d'objets présents.

Sur le flux condensé les entités peuvent être sélectionnées. A ces entités sont attachés leurs instants de début et de fin dans la vidéo d'origine. Pour une entité sélectionnée, la séquence vidéo comprise entre l'apparition de l'entité, instant de début, et la disparition de l'entité, instant de fin, constitue une piste comme cela a été indiqué précédemment. La sélection d'un objet sur la vidéo condensée permet de recaler temporellement la visualisation du flux original à l'instant de début de l'événement sélectionné. Un événement est caractérisé par une durée courte, quelques secondes ou quelques minutes selon le type d'événement.

Ainsi les moyens de visualisation 7, reliées à un ordinateur, comporte la vidéo d'origine 31. Celle-ci est présentée sur la figure 3 à un instant donné. On exécute sur cette vidéo d'origine un algorithme de détection et de suivi qui en extrait tous les objets intéressants pour l'opérateur, mobiles ou non, sous formes de pistes 32 formant la zone synoptique décrite ci-dessus. Ensuite, une fonction d'optimisation permet de minimiser l'espace pris par les objets mobiles et créer une nouvelle vidéo 33, plus courte que la vidéo d'origine. Cette nouvelle vidéo est la vidéo condensée qui affiche sur une même image plusieurs pistes. Dans l'exemple de la figure 3, les pistes 32 sont représentées par des lignes temporelles agrégées en pile, en dessous de la représentation condensée 32. En dessous de la représentation de la vidéo d'origine 31, les pistes 34 sont représentées par des lignes temporelles 34 qui ne sont plus agrégées mais représentées à leurs instants d'apparitions réels, en pile. On voit que l'on peut avoir plusieurs pistes en parallèle, c'est-à-dire des pistes simultanées. C'est le cas notamment sur la scène 31 où deux objets mobiles 35, 36 sont suivis. Une première piste 37 correspond au premier objet mobile 36 et une deuxième piste 38 correspond au deuxième objet mobile. Les pistes 37, 38 sont représentées par des lignes temporelles placées entre les instants d'apparition et de disparition des objets mobiles sur la scène. Ces mêmes pistes se retrouvent sur la représentation agrégée des pistes, sous une échelle des temps plus dilatée, et notamment la piste 37 du premier véhicule 35 que suit et analyse par exemple un opérateur à partir de la vidéo condensée.

Le navigateur permet de naviguer dans ce flux condensé et de rejouer immédiatement le flux d'origine où l'objet sélectionné dans le flux condensé est présent.

Ainsi, en scrutant le flux condensé 33 l'opérateur sélectionne le premier véhicule 35, appelé véhicule A par la suite. L'instant de sélection du véhicule A dans la vidéo condensée est faite à un instant To de la scène. On peut alors rejouer la vidéo d'origine à partir de cet instant To et plus précisément un peu avant afin de remonter jusqu'à l'apparition du véhicule A sur la scène. A partir de cet instant de sélection To, l'opérateur navigue dans la piste d'origine pour avoir plus d'informations de contexte affichée sur l'écran 7, conformément au principe de l'invention tel que décrit dans l'exemple de la figure 2.

Ces informations de contexte peuvent être des images, par exemple une vue agrandie du véhicule ou du visage du conducteur captées par une ou plusieurs caméras disposée en un lieu de passage du véhicule sur la scène. Les informations peuvent également être textuelles, par exemple le numéro minéralogique du véhicule A et des autres véhicules qu'il croise, ces informations étant par exemple prises par un capteur positionné le long de la route. D'autres informations peuvent être affichées, par exemple :
- la vitesse du véhicule A détectée par un radar Doppler ;
- le flux de véhicule lors du passage du véhicule A sur la scène obtenu par un radar de comptage de flux ;
- des informations météorologiques.

Plus généralement, au fur et à mesure de la création d'une piste 37, on enrichit celle-ci d'informations contextuelles en fonction des capteurs disponibles avec la possibilité d'ajouter des annotations manuelles par des opérateurs.

Pour afficher toutes ces informations contextuelles, on peut utiliser un programme spécifique, connu généralement sous le nom d'inspecteur dans le domaine du développement logiciel. Cet inspecteur liste toutes les informations obtenues par les différents capteurs ou autres éléments, liés à un objet mobile, un lieu ou un événement, ou tout à la fois. Il exécute ensuite l'affichage de ces informations, avec l'indication de la date et de l'heure si nécessaire. Ces informations sont stockées dans une liste spécifique 203.

Dans l'exemple d'application de la figure 3, l'inspecteur analyse la piste sélectionnée, en l'occurrence la piste 37 du véhicule A. Il peut reconstituer à partir des images vidéo de la piste et des données issues des capteurs ou des annotations manuelles les données contextuelles à afficher lors de la navigation dans la piste effectuée par un opérateur.

Dans l'exemple d'application de la figure 3, un système et un procédé selon l'invention met en oeuvre les étapes suivantes décrites ci-après.

Dans une première étape, on effectue l'extraction des informations sur les objets et les événements présents dans la scène enregistrée par les différents capteurs 2, 8 sous forme de pistes spatio-temporelles issue de plusieurs capteurs 20, 37, 38, qui conservent notamment un identifiant unique, et les enregistrer sous forme de volumes spatio-temporels et de données numériques, textuelles et images associées incluant le type d'objet et d'événement, son identifiant unique, l'ensemble des instant d'acquisition des images et l'identifiant du capteur qui l'a enregistré. Cet identifiant permet de reconnaître qu'une information est issue de ce capteur. Une piste spatio-temporelle est un ensemble d'informations spatiales et temporelles issues de capteurs physiques ou de données informatiques associées pour représenter un objet physique. On pourra appeler par la suite des pistes spatio-temporelles issues de plusieurs capteurs, des pistes spatio-temporelles multi-capteurs.

Dans une deuxième étape, on sélectionne une partie des volumes spatio-temporels des objets et événements ayant été détectés selon le type d'objet ou d'événement et selon leur localisation spatiale et temporelle.

Dans une troisième étape, on recrée un ensemble de séquences de synopsis des volumes spatio-temporels des objets et événements pour affichage et navigation, l'affichage et la navigation consistant à :
- effectuer le décalage temporel des volumes spatio-temporels des objets et événements ayant été détectés puis afficher les volumes spatio-temporels décalés simultanément sur un même intervalle de temps, le positionnement spatial des volumes spatio-temporels étant conservés dans la séquence de synopsis ;
- afficher la séquence vidéo d'origine positionnées temporellement à l'instant de la présence de ce volume spatio-temporel lors de la sélection sur la séquence de synopsis de l'un des volumes spatio-temporels ; et
- lors de la sélection sur la séquence de synopsis de l'un des volumes spatio-temporels, afficher l'ensemble des informations contextuelles de pistes spatio-temporelles multi-capteurs associées à ce volume.

Avantageusement, l'invention associe des capteurs aux pistes, plus précisément des données captées pour les enrichir d'informations contextuelles. Ces informations peuvent être une heure de passage de l'objet sélectionné à un péage ou à un parking, ou à une porte de bâtiment ou à un ascenseur. Elles peuvent être encore un numéro associé à l'objet, par exemple un numéro minéralogique, capté par exemple lors d'un passage à un péage, ou un numéro de téléphone capté par des balises GSM. A côté de ces informations affichées sous forme de texte, on peut afficher d'autres informations sous forme d'images, par exemple un visage ou une cartographie illustrant une trajectoire suivie reconstituée par la vidéo ou captée autrement. Le visage peut être capté par des caméras dédiées. Un algorithme de détection ou de reconnaissance peut être appliqué sur le visage afin de reconnaître une personne en cas de besoin.

Toujours dans le cadre d'informations contextuelles associées aux pistes, on peut ajouter des informations données par des opérateurs ou des agents ayant accès au système. Le lien avec la piste peut se faire :
- Directement en accédant à la piste ;
- Soit par corrélation spatio-temporelle, à partir de deux événements ayant eu lieu au même endroit et/ou au même instant.

Dans l'exemple de mise en oeuvre de l'invention illustré par la figure 3, on a utilisé une vidéo condensée, mais on peut envisager d'autres applications de l'invention sans vidéo condensée.

## Revendications

1. Procédé de supervision mis en oeuvre par ordinateur pour extraire, manipuler et visualiser un ensemble d'informations provenant d'au moins un réseau de capteurs vidéo, incluant un ensemble de caméras vidéo (2), et d'au moins un réseau de capteurs physiques non vidéo, ledit procédé comportant au moins les étapes suivantes :
- Extraire des informations sur les objets et les événements présents dans une scène enregistrée par lesdits capteurs sous forme de pistes spatio-temporelle issues des capteurs (2,8) ;
- Enregistrer lesdites informations sous forme de volumes spatio-temporels et de données numériques, textuelles et/ou images incluant le type d'objet et d'événement, lesdites données incluant l'identifiant du capteur dont elles sont issues ;
- Sélectionner une partie desdits volumes spatio-temporels desdits objets et événements ayant été détectés selon le type d'objet ou d'événement et selon leur localisation spatiale et temporelle ;
- Lors de la sélection de l'un desdits volumes spatio-temporels, afficher la ou les séquences vidéo positionnées temporellement à l'instant (To) de la présence de ce volume spatio-temporel et afficher sur un écran (7) l'ensemble des informations de pistes spatio-temporelles issues des capteurs associés à ce volume.
tout élément d'intérêt, parmi lesdites informations, étant apte à être stocké dans une liste spécifique (203) par sélection d'un opérateur, ledit événement étant apte à être lié à d'autres éléments via ladite liste en sélectionnant ledit événement et ces autres dits éléments dans ladite liste par une interface de navigation.

2. Procédé selon la revendication 1, **caractérisé en ce que** lesdites informations de piste affichées (22, 23, 24, 25, 26, 27) sont liées auxdits objets ou auxdits événements.

3. Procédé selon l'une quelconque des revendications précédentes, **caractérisé en ce que** lesdites informations sont compressées temporellement et spatialement.

4. Procédé selon l'une quelconque des revendications précédentes, **caractérisé en ce que** les emplacements physiques des capteurs fournissant des informations sont visibles sur une représentation cartographique (23, 202) affichée sur ledit écran (7).

5. Procédé selon l'une quelconque des revendications précédentes, **caractérisé en ce que** les emplacements physiques des capteurs fournissant des informations sont visibles sur lesdites séquences vidéo affichés sur ledit écran (7).

6. Procédé selon l'une quelconque des revendications 4 ou 5, **caractérisé en ce que** des informations associées auxdits capteurs sont affichées par sélection desdits emplacements.

7. Procédé selon l'une quelconque des revendications précédentes, **caractérisé en ce qu'**il est appliqué à des opérations de vidéosurveillance.

8. Système de supervision, **caractérisé en ce qu'**il comporte au moins :
- un réseau de capteurs (2, 8) incluant un ensemble de caméras vidéo, destiné à être installé sur un site à superviser ;
- un écran de visualisation (7) équipé d'un système de navigation ;
- une infrastructure de traitement (5) apte à acquérir les données issues desdits capteurs et relié et apte à mettre en oeuvre le procédé selon l'une des revendications précédentes, ladite infrastructure comportant au moins un écran de visualisation (7) équipé d'un système de navigation, ledit écran affichant lesdites séquences vidéo et lesdites informations de pistes spatio-temporelles.
